**Europäisches Patentamt**

**European Patent Office**

**Office européen des brevets**

(19)

(11) Publication number: **0 018 787**
**A1**

(12) ## EUROPEAN PATENT APPLICATION

(21) Application number: **80301340.8**

(22) Date of filing: **24.04.80**

(51) Int. Cl.³: **G 02 B 27/17**
**G 03 G 15/052, G 03 B 27/52**

(30) Priority: **25.04.79 US 32985**

(43) Date of publication of application:
**12.11.80 Bulletin 80/23**

(84) Designated Contracting States:
**DE FR GB IT NL**

(71) Applicant: **XEROX CORPORATION**
**Xerox Square - 020**
**Rochester New York 14644(US)**

(72) Inventor: **Brueggemann, Harry P.**
**980 Sherwood Road**
**San Marino, California(US)**

(74) Representative: **Goode, Ian R. et al,**
**European Patent Attorney c/o Rank Xerox**
**Limited,Patent Dept. Rank Xerox House 338 Euston**
**Road**
**London NW1 3BH(GB)**

(54) Optical scanning apparatus.

(57) An optical scanning apparatus in which the facets (5) of a rotating polygon (16) are illuminated by a collimated light beam (3), and a post-polygon objective (6), comprised of one negative lens element (8) near the polygon and one positive lens element(10), is utilized to focus the monochromatic light beam at a photosensitive surface (12). The apparatus provides a flat field of focus at the photosensitive surface, provides a constant linear scan rate across the photosensitive surface, eliminates bow distortion, and eliminates sensitivity to polygon facet alignment and fabrication errors, and has diffraction-limited performance.

Croydon Printing Company Ltd.

- 1 -

OPTICAL SCANNING APPARATUS

This invention relates to an optical scanning apparatus comprising a source of a high intensity light beam, a movable light reflective element located along the optical path between the source of the high intensity light beam, and a photosensitive surface. Typically the reflective element is a facet of a rotating polygon, and the light beam source is a laser.

One type of conventional flying spot laser scanner utilizes a flat photosensitive surface, pre-polygon objectives being utilized to focus the laser beam at the photosensitive surface. Pre-polygon objectives do not provide a flat field of focus coextensive with the photosensitive surface, but instead provide a field of focus which is curved, with the center of curvature of the field of focus approximately at the polygon. Thus, pre-polygon objectives only provide a focused beam at two locations along the photosensitive surface (the two points where the curved field of focus intersects the flat photosensitive surface) and not along the entire photosensitive surface. Also, when pre-polygon objectives are used to converge the laser beam toward a focus at the photosensitive surface, the length and position of the scan lines at the photosensitive surface are sensitive to polygon facet alignment and fabrication errors.

Another drawback of using pre-polygon objectives is that the velocity of the scan spot at the photosensitive surface is not constant, but varied as the tangent of the scan angle. The scan velocity variations cause the data density of the information recorded on the photosensitive surface to be non-uniform, the non-uniformity of data density manifesting itself as a lightening of the edges of the document produced by the scanner in comparison to the central portion of the document.

Conventional flying spot laser scanners avoid light beam interference with the polygon by providing the laser beam with an offset angle in the sagittal (cross-scan) plane. That offset angle causes the scan beam to have bow (a bending of the scanned line) at the photosensitive surface.

- 2 -

The field curvature and beam velocity variations can be minimized by reducing the scan angle, but such a reduction requires a polygon with a large number of facets (24 - 36), which is expensive, and it also requires a large distance between the polygon and the photosensitive surface, which probably would consume more than the alloted machine space. Scan length variations from facet-to-facet can be corrected by electronics that regulate the data rate in accordance with the facet currently providing the scan. Obviously, the ways set forth for correcting the problems of field curvature, velocity variation and scan length variation are not totally acceptable, and less complex and less costly alternatives are desirable. The bow problem alluded to can be minimized, and field curvature can be corrected simultaneously, by a curved post-polygon mirror, but that solution to the field curvature and bow problems does not correct the problems of beam velocity variations and scan length variations.

The present invention is intended to overcome these problems, and provides an optical scanning apparatus which is characterised in that a lens system is interposed in the optical path between the source of the high intensity light beam and the movable light reflective element for collimating the high intensity light beam, and that a lens system comprised of a negative lens and a positive lens is interposed in the optical path between the movable light reflective element and the photosensitive surface, whereby a flat field of focus and a linear scan rate are provided at photosensitive surface, and bow distortion and sensitivity to reflective element fabrication errors are eliminated.

In the apparatus of the invention, the facets of a rotating polygon of a scanning system are illuminated by a collimated light beam, and a post-polygon objective, comprised of one negative lens element and one positive lens element, is utilized to focus the light beam at a photosensitive surface. Illumination of the polygon facets with a collimated light beam eliminates sensitivity to polygon facet alignment fabrication errors, and, in addition, makes permissible a large angular offset in the scan plane between the axis of the light

beam and the end of scan position without introducing aberrations or the distortions associated with the limacon shape of the pre-polygon objective field curvature. Furthermore, the noted angular offset in the scan plane eliminates interference between the reflected beam and the polygon, thus there is no need for a sagittal offset angle, and therefore no bow. Use of a post-polygon objective comprised of one negative lens element of low index of refraction and one positive lens element of high index of refraction provides a flat field of focus coextensive with a flat photosensitive surface. To provide a constant linear scan velocity at the photosensitive surface, "barrel" distortion is introduced by placing the negative lens element of the post-polygon objective nearest the polygon, with the positive lens element of the post-polygon objective at a distance behind the negative lens element. The introduction of the proper amount of barrel distortion, which makes a square shape look "barrel-shaped", cancels any scan velocity variation which is a function of the tangent of the angle of the scanned beam to the axis of the post-polygon objective.

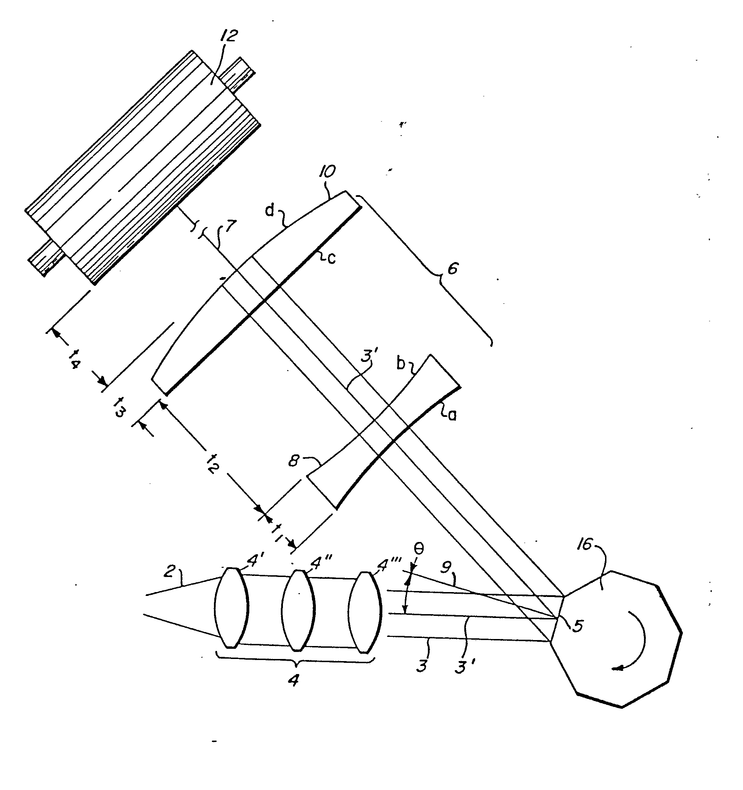

A specific embodiment of the invention is described in detail below with reference to the drawing which is a schematic representation in the scan plane of the scanning system of the present invention at the center of scan position.

Referring to the drawing, an information modulated laser beam 2 is incident upon a lens system 4 which provides a collimated light beam 3 at a facet 5 of a multi-faceted, rotating polygon 16. Lens system 4 can, for example, be comprised of three lens elements having powers defined as follows:

$$P_1 = \frac{K L P_T^2 + t_1 L P_T^2 + t_2 P_T - 1}{t_1 (K L P_T^2 - 1)}$$

$$P_2 = \frac{K L P_T^2 + t_1 P_T + t_2 P_T - 1}{t_1 t_2 P_T}$$

$$P_3 = \frac{K L P_T^2 + t_1 P_T + t_2 K P_T^2 - 1}{t_2 (K L P_T^2 - 1)}$$

- 4 -

where $p_T$ is the power of the combination of the three lenses of the lens system 4, $t_1$ is the distance between the first lens element 4' and the second lens element 4", $t_2$ is the distance between the second lens element 4" and the third lens element 4''', K is the distance from the front focal point of the lens system 4 to lens element 4', and L is the distance from the back focal point of the lens system 4 to lens element 4'''. The usefulness of these equations is that they allow a short distance to be obtained between the front focal point and the back focal point of the lens system 4.

A post-polygon objective 6 focuses the collimated light beam incident on the facet 5 at the photosensitive surface 12. Post-polygon objective 6 is comprised of two lens elements, a negative lens element 8 of a material having a low index of refraction disposed nearest the polygon 16 and a positive lens element 10 of a material having a high refractive index disposed between lens element 8 and photosensitive surface 12. As is customary, a negative lens element denotes a lens that is wider at the edges thereof than in the middle, and a positive lens element denotes a lens that is narrower at the edges thereof than in the middle, or a negative element is light diverging, while a positive element is converging of light.

Post-polygon objective 6 has an axis 7, that is, lens elements 8 and 10 are both centered about axis 7. Axis 7 is coincident with the center 3' of the collimated scanning beam 3 at the center of scan position as shown.

An offset angle θ, defined as the angle between the normal 9 to active reflecting facet 5 and axis 3', is provided to eliminate interference between lens system 4 and post-polygon objective 6 when there is no offset angle in the sagittal plane.

Illumination of the facets of polygon 6 with a collimated light beam eliminates sensitivity to polygon facet fabrication errors since any irregular alignment of the facets (varying facet distance to the rotation axis of the polygon or scan plane angular errors) will always result in parallel rays being incident on the post-polygon objective and such parallel rays will be focussed by the post-polygon objective 6 at the same spot on the photosensitive surface. Also, with collimated light incident on the polygon facets, a large scan plane

- 5 -

offset angle $\theta$ is permissible without introducing aberrations, or the distortions associated with the limacon shape of the scan if a non-collimated beam is used. The large scan plane angular offset makes it possible to eliminate the cross-scan angular offset usually used to eliminate interference, and eliminating cross-scan offset eliminates bow.

By utilizing a post-polygon objective comprised of one negative lens element of low index of refraction and one positive lens element of high index of refraction, a flat field is provided which is substantially coextensive with the photosensitive surface 12. Placement of the negative lens element of the post-polygon objective nearer to the polygon than the positive lens element of the post-polygon objective, introduces barrel distortion into the system. The barrel distortion cancels the scan velocity variation which is a function of the tangent of the angle of the active facet to the post-polygon objective axis, thereby providing a constant linear scan rate at the photosensitive surface 12.

Although the post-polygon objective of the invention is component limited, consisting of only two optical elements, it eliminates all of the aforenoted drawbacks of prior art scanners. The basic design is flexible, and it will be readily apparent to one skilled in the art that various glass types may be used depending on availability and cost of glass blanks, or the wavelength of the laser beam. In addition, the post-polygon objective permits usage of a polygon with a low number of facets (18 - 20) which may be changed as required to change the polygon-photosensitive surface distance as required by machine size, and allows the focal length to be changed for various scan lengths at the photosensitive surface 12.

Tables I and II hereinafter set forth specific values of parameters of the two lens elements of the post-polygon objective. Variations in the parameters for differing systems will be apparent to those skilled in the art. Note: curvatures are commonly given to four (4) significant figures. Surfaces a and b are the first and second surfaces of lens element 8, and surfaces c and d are first and second surfaces of lens element 10, as shown in the drawing. Thicknesses $t_1$ and $t_3$ are the thicknesses of lens elements 8 and 10 respectively, and distances $t_2$ and $t_4$ are respectively the

spacing of the lens elements 8 and 10, and the spacing of lens element 10 from the photosensitive surface 12.

## TABLE I

| Surface | Lens | Glass | Curvature (mm) | Thickness/Distance (mm) |
|---------|------|-------|----------------|--------------------------|
| a       |      |       | -2.1278        |                          |
|         | 8    | BK7   |                | $t_1$    4.7625          |
| b       |      |       | 2.0925         |                          |
|         |      |       |                | $t_2$    32.2098         |
| c       |      |       | 0.7983         |                          |
|         | 10   | SF6   |                | $t_3$    9.7561          |
| d       |      |       | -2.9482        |                          |
|         |      |       |                | $t_4$    614.909         |
| 12      |      |       |                |                          |

Wave length:      632.8nm
F/number:      107.1855 (at $1/e^2$ points)
Tang. Offset θ      25.0 degrees
Field of View:      ± 20 degrees

## TABLE II

| Surface | Lens | Glass | Curvature (mm) | Thickness/Distance (mm) |
|---------|------|-------|----------------|--------------------------|
| a       |      |       | -2.1600        |                          |
|         | 8    | BK7   |                | $t_1$    10.668          |
| b       |      |       | 1.1471         |                          |
|         |      |       |                | $t_2$    50.711          |
| c       |      |       | 0.4920         |                          |
|         | 10   | F2    |                | $t_3$    8.8900          |
| d       |      |       | -3.2997        |                          |
|         |      |       |                | $t_4$    702.671         |
| 12      |      |       |                |                          |

0018787

- 7 -

| | |
|---|---|
| Wave length: | 441.6nm |
| F/number: | 96.0 (at $1/e^2$ points) |
| Tang. Offset θ: | 25.0 degrees |
| Field of View: | $\pm$ 18 degrees |

CLAIMS:

     1.    Optical scanning apparatus comprising a source of a high intensity light beam (2), a moveable light reflective element (16) located along the optical path between the source of the high intensity light beam (2), and a photosensitive surface (12) characterized in that,

     a lens system (4) is interposed in the optical path between the source of the high intensity light beam (2) and the moveable light reflective element (16) for collimating the high intensity light beam (2), and that a lens system comprised of a negative lens (8) and a positive lens (10) is interposed in the optical path between the moveable light reflective element (16) and the photosensitive surface (12), whereby a flat field of focus and a linear scan rate are provided at photosensitive surface (12), and bow distortion and sensitivity to reflective element (16) fabrication errors are eliminated.

     2.    The apparatus of Claim 1, wherein the negative lens (8) is closer to the moveable light reflective element (16) than is the positive lens (10).

     3.    The apparatus of Claim 1 or Claim 2, wherein the negative lens (8) is of a material having a lower index of refraction than the index of refraction of the material of positive lens (10).

     4.    The apparatus of any one of Claims 1 to 3, wherein the lens system (4) comprises three lens elements.

     5.    The apparatus of any one of Claims 1 to 4, wherein the moveable light reflective element (16) is a multi-faceted polygon.

0018787

European Patent Office

**EUROPEAN SEARCH REPORT**

Application number

EP 80 30 1340

| | DOCUMENTS CONSIDERED TO BE RELEVANT | | | CLASSIFICATION OF THE APPLICATION (Int. Cl.) |
|---|---|---|---|---|
| Category | Citation of document with indication, where appropriate, of relevant passages | Relevant to claim | | |
| | <u>DE - A - 2 728 304</u> (CANON)<br><br> * page 38, example, figure 38; claims; pages 52,53; figures 38, 65,66 * | 1,2,3 | | G 02 B 27/17<br>G 03 G 15/052<br>G 03 B 27/52 |
| | <u>DE - A - 2 820 073</u> (CANON)<br><br> * claims; figures 1,25,28,32; pages 34,35 * | 1,2,5 | | |
| A | <u>DE - A - 2 855 830</u> (OLYMPUS)<br><br> * claims; figures * | 1 | | **TECHNICAL FIELDS SEARCHED (Int.Cl.)**<br><br>G 02 B 27/17<br> 27/00<br>G 03 G 15/052<br>G 03 B 27/52 |
| A | <u>US - A - 3 961 838</u> (C.A. ZANONI)<br><br> * abstract; figures * | 1 | | |
| A | <u>US - A - 3 873 180</u> (S. BOUSKY)<br><br> * abstract; figures * | 1 | | |
| A | <u>US - A - 3 668 984</u> (S. ROSIN)<br><br> * claims 1,2; figures * | 1 | | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | The present search report has been drawn up for all claims | | | &. member of the same patent family, corresponding document |

| Place of search | Date of completion of the search | Examiner |
|---|---|---|
| The Hague | 17.07.1980 | PFÄHLER |

EPO Form 1503.1 06.78

BAD ORIGINAL